# EUROPEAN PATENT APPLICATION

(11) **EP 2 597 576 A1**
(43) Date of publication of application: **29.05.2013**
(21) Application number: 12173400.8
(22) Date of filing: 25.06.2012
(51) Int. Cl.: G06F 13/38

(54) **Apparatus of storage medium for interfacing both host and mobile device**

(30) Priority: 24.11.2011 TW 100143181
(71) Applicant: Midas Mana Technology Sdn. Bhd., 10200 Penang (MY)
(72) Inventor: Lin, Peng-Fei, 300 Hsinchu City (TW)
(74) Representative: Gee, Steven William

(57) **Abstract**

An apparatus of storage medium for interface both USB host and USB OTG device is provided, including a USB module, a micro USB module, a control module, a storage module, where the control module is connected to the USB module, the micro USB module and the storage module, and provides signals to determine and control the data flow among the above modules. The apparatus can be connected to a USB host via the USB module and/or a USB OTG device via the micro USB module to access data in the storage module. The storage module can be realized as, for example, a pendrive module, a memory card reader with memory card, or a pendrive module plus a memory card reader with memory card. When connected to both a USB host and a USB OTG device simultaneously, the apparatus of the present invention can function as a USB cable.

## Description

### FIELD OF THE INVENTION

The present invention generally relates to an apparatus of storage medium, and more specifically to an apparatus of storage medium for interfacing both host and mobile device.

### BACKGROUND OF THE INVENTION

The rapid development of consumer mobile electronic device has sprung an astronomical growth in digital data generated, spread and circulated around the world. There are literally hundreds of millions of users transfer digital data from one device to another. The conventional manner is through the use of a USB mass storage, such as, flash drive. However, as USB specification evolves, the landscape of file transferring technologies grows more complicated as well as more convenience is demanded and eventually becomes available. For example, the USB On-The-Go (OTG) of the USB 2.0 specification allows two USB devices to communicate with each other without requiring a separate USB host. In other words, a USB device can become a host of another USB device, such as, a mobile phone can copy a picture file from a digital camera if both are equipped with USB 2.0 interface. From this perspective, the needs of using storage medium as a vessel for transferring files from one USB device to another USB device seems to be on an obsolete track. On the other hand, the repertoire of different USB connector types has grown to include mini-USB and micro-USB for smaller USB devices, such as, PDA, mobile phones and digital cameras, in additional to the standard USB connector which is included in USB host. From this perspective, even when all the USB involved are of USB 2.0 specifications, the digital files stored in a memory card, such as, SD card, would still require one interface for connecting to a USB host and a different interface for connecting to a USB OTG device.

The conventional many-in-one card readers often deal with the issue of allowing a card read to be used with a USB host and able to accommodate different types of memory cards, such as, SD, MS, MMC, and so on. However, the products currently available in the market have failed to address the needs for the above scenario. As more and more smaller devices equipped with micro-USB connectors are available, it is imperative to devise a solution to address the needs.

### SUMMARY OF THE INVENTION

The primary object of the present invention is to provide an apparatus of storage medium for interfacing both USB host and USB OTG device.

To achieve the above object, the present invention provides an apparatus of storage medium for interfacing both USB host and USB OTG device, including a USB module, a micro USB module, a control module, a storage module, where the control module is connected to the USB module, the micro USB module and the storage module, and provides signals to determine and control the data flow among the above modules. The apparatus can be connected to a USB host via the USB module and/or a USB OTG device via the micro USB module to access data in the storage module. The storage module can be realized in various configurations, for example, a pendrive module, a memory card reader with a memory card, or a pendrive module plus a memory card reader with a memory card. When connected to both a USB host and a USB device simultaneously or two USB devices, the apparatus of the present invention can function as a USB cable.

The foregoing and other objects, features, aspects and advantages of the present invention will become better understood from a careful reading of a detailed description provided herein below with appropriate reference to the accompanying drawings.

### BRIEF DESCRIPTION OF THE DRAWINGS

The present invention can be understood in more detail by reading the subsequent detailed description in conjunction with the examples and references made to the accompanying drawings, wherein:
FIG. 1 shows a schematic view of an apparatus for storage medium to interface both USB host and USB OTG device according to the invention; and
FIG. 2 shows a schematic view of an embodiment of storage module of the present invention having a pendrive module plus a memory card reader with a memory card.

### DETAILED DESCRIPTION OF THE PREFERRED EMBODIMENTS

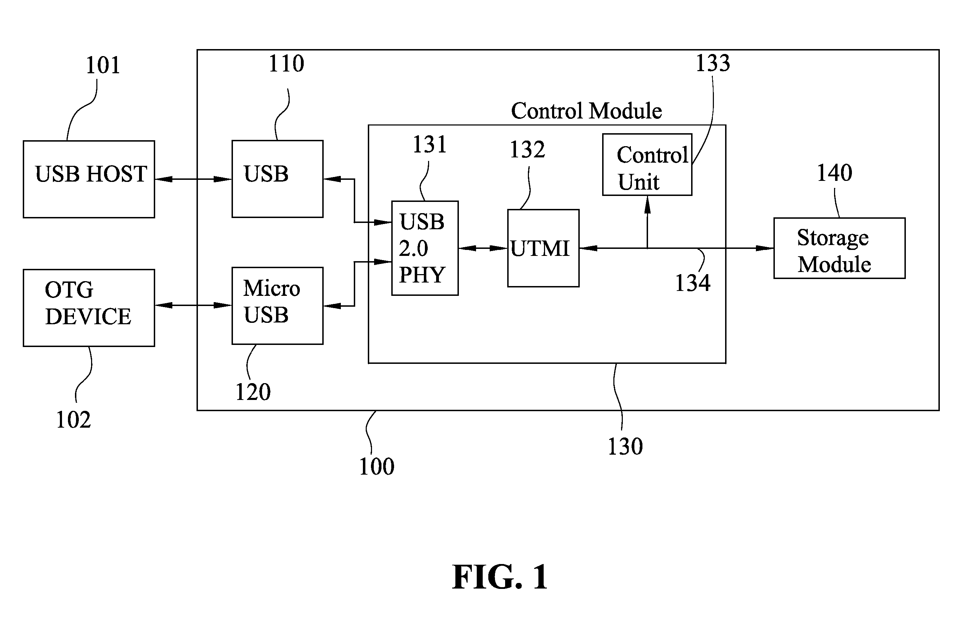

FIG. 1 shows a schematic view of an apparatus for storage medium to interface both USB host and USB OTG device according to the invention. An apparatus 100 includes a USB module 110, a micro USB module 120, a control module 130, and a storage module 140, wherein control module 130 is connected to USB module 110, micro USB module 120, and storage module 140. USB module 110 provides connection to a USB host 101 and micro USB module 120 provides connection to a USB OTG device 102. Storage module 140 provides data storage, and can be implemented with various configurations. It is worth noting that control module 130 further includes a USB physical layer 131, an UTMI 132, a control unit 133, and a bus 134. USB physical layer 131 can be, for example, USB 2.0 physical layer, and is connected to both USB module 110 and micro USB module 120 to handle the physical layer connection signals. UTMI 132 is connected to USB physical layer 131 to handle the exchange between USB physical layer 131 and control unit 133. UTMI 132 can be, for example, USB2.0 Transceiver Macrocell Interface (UTMI). UTMI 132. Control unit 134 can be, for example, an 8051 microprocessor. Bus 134 is connected to both UTMI 132 and control unit 133 for path for control signals and data.

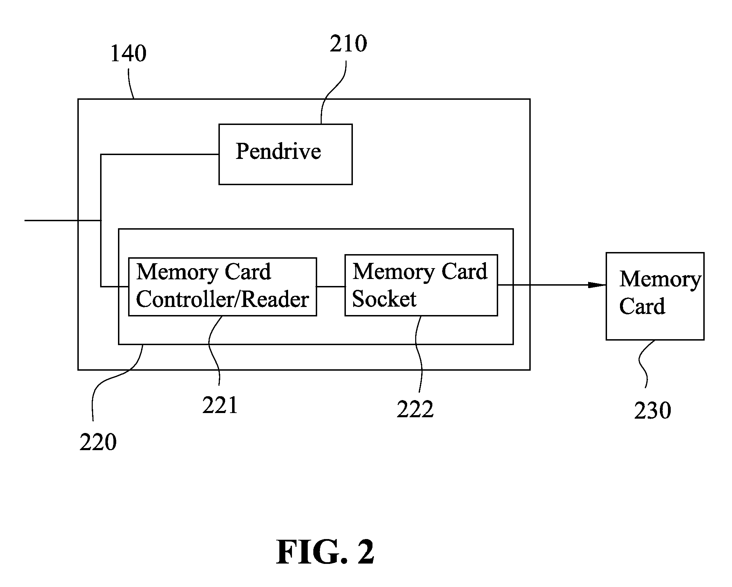

As mentioned, storage module 140 can be implemented with various configurations. For example, storage module 140 can be a pendrive module with built-in storage. The pendrive module can be implemented with a flash controller plus built-in flash memory or with a memory card reader plus a built-in memory card. A second configuration of storage module 140 can be a memory card reader providing a memory card socket for inserting an external memory card. Alternatively, storage module 140 can include both a pendrive module with built-in storage and a memory card reader providing a memory card socket for inserting an external memory card. FIG. 2 shows a schematic view of an embodiment of the storage module of the present invention including both a pendrive module with built-in storage and a memory card reader providing a memory card socket for inserting an external memory card. As shown in FIG. 2, Storage module 140 includes a pendrive module 210 and a memory card reader 220, wherein memory card reader 220 further includes a memory card controller/reader 221 and a memory card socket 222. Memory card socket 222 is for inserting a memory card 230 and memory card controller/reader 221 is for controlling read/write to memory card 230 inserted into memory card socket 222.

Thus, the storage module 140 is connected to bus 134, and more particularly, in the embodiment of FIG. 2, both pendrive module 210 and memory card reader 220 are both connected to bus 134 f so that data can be read from or written to the built-in flash memory or built-in memory card of pendrive module 210 as well as external memory card 230 inserted into memory card socket 222 of memory card reader 220.

For writing data, the data enters from either USB host 101 via USB module 110 or USB OTG device 102 via micro USB module 120 to USB physical layer 131. The data further passes to UTMI 132 and is received by control unit 133. Control unit 133 passes data accordingly to storage module 140. For example, in the above embodiment, the data can be written to built-in flash memory or built-in memory card of pendrive module 140 as well as external memory card 230 inside memory card socket 222 1 memory card 230 is present. On the other hand, when reading data from pendrive module 210 and external memory card 230 inside memory card socket 222, the data path is reversed. It is worth noting that when storage module 140 includes a pendrive module 210 and a memory card reader 220, as in the above embodiment, the USB host or the USB OTG device that the apparatus of the present invention is connected to will display two icons of disk if an external memory card is inserted into memory card socket 222 so that the USB host or the USB OTG device can access data on both disks.

Because the apparatus of the present invention includes both a standard USB module and a micro USB module, the apparatus can be used to connect a USB host and/or a USB OTG device without assistance of cables or adaptor. In addition, when connected to both a USB host and a USB OTG device at the same time, the apparatus of the present invention can act as a cable linking the USB host and the USB OTG device. Similarly, when connected to two USB OTG devices at the same time, the apparatus of the present invention can act as a cable linking the two USB OTG devices. This can achieved by turning USB physical layer 131 into a high impedance state so that the apparatus can act as a USB connection cable.

It is also worth noting that the apparatus of the present invention can further include a mini USB module so that the apparatus of the present invention can also interface devices equipped with mini USB interface.

While there is no restriction on the physical layout of the placement of the USB, micro USB and mini USB modules, a preferred embodiment is to place the three different interfaces on different sides of the present invention so as to provide convenience use.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. An apparatus for storage medium to interface both USB host and USB On-The-Go(OTG) device, comprising:
a USB module, for connecting externally to a USB host;
a micro USB module, for connecting externally to a USB OTG device;
a control module, connected to said USB module and said micro USB module; and
a storage module, connected to said control module and for providing data storage; and
wherein said control module providing signals to determine and control data flow between said USB module/ micro USB module and said storage module.

2. The apparatus as claimed in claim 1, wherein said storage module is a pendrive module having built-in memory.

3. The apparatus as claimed in claim 2, wherein said pendrive module comprises a flash controller and a built-in flash memory.

4. The apparatus as claimed in claim 2, wherein said pendrive module comprises a memory card reader and a built-in memory card.

5. The apparatus as claimed in claim 1, wherein said storage module is a memory card reader providing a memory socket for inserting an external memory card.

6. The apparatus as claimed in claim 1, wherein said storage module further comprises a pendrive module and a memory card reader providing a memory socket for inserting an external memory card.

7. The apparatus as claimed in claim 1, wherein said control module further comprises:
a USB physical layer, connecting to both said USB module and said micro USB module to handle physical layer connection signals;
an UTMI, connected to said USB physical layer;
a control unit, for controlling data flow among said USB module, said micro USB module, said storage module; and
a bus, connecting said UTMI and said control unit for providing path of control signals and data.

8. The apparatus as claimed in claim 7, wherein said USB physical layer is USB 2.0 physical layer.

9. The apparatus as claimed in claim 7, wherein said UTMI is USB2.0 Transceiver Macrocell Interface (UTMI).

10. The apparatus as claimed in claim 7, wherein said control unit is an 8051 microprocessor.

11. The apparatus as claimed in claim 7, wherein when said apparatus is connected to either a USB host or a USB OTG device, said USB physical layer determines whether said connection is to said USB host or said USB OTG device.

12. The apparatus as claimed in claim 11, wherein said apparatus is connected both via said USB module to said USB host and via micro USB module to said USB OTG device, said apparatus acts as a USB connection cable by turning said USB physical layer into high impedance.

13. The apparatus as claimed in claim 1, further comprising a mini USB module connected for connecting externally to a USB OTG device, said mini USB module being connected to said control module.
